# EUROPEAN PATENT APPLICATION

(11) **EP 4 769 294 A1**
(43) Date of publication of application: **01.07.2026**
(21) Application number: 25202363.5
(22) Date of filing: 16.09.2025
(51) Int. Cl.: G06T 5/60, G06T 7/11, G06T 7/194

(54) **METHOD AND DEVICE WITH IMAGE PROCESSING**

(30) Priority: 27.12.2024 KR 20240198455
(71) Applicant: Samsung Electronics Co., Ltd, Suwon-si, Gyeonggi-do 16677 (KR)
(72) Inventor: LEE, Dongwook, 16678 Suwon-si (KR); KIM, Seongeun, 16678 Suwon-si (KR); PARK, Seungin, 16678 Suwon-si (KR); YUN, Ilwi, 16678 Suwon-si (KR); HWANG, Sunjun, 16678 Suwon-si (KR)
(74) Representative: Arnold & Siedsma

(57) **Abstract**

A method of image processing based on image restoration and a device for using the same are provided. The method includes segmenting a first original input image including a first background region and a first feature region into first patches, determining sampled patches by sampling background patches corresponding to the first background region preferentially over feature patches corresponding to the first feature region from the first patches, generating a first restored image by executing an image restoration model based on the sampled patches, and training the image restoration model to reduce a difference between the first original input image and the first restored image.

## Description

### BACKGROUND

### Field

The following description relates to a method and device with image processing.

### Description of Related Art

A deep learning-based neural network may be used for image processing. Once trained, the neural network may perform inference suitable for the purpose by mapping input data and output data to each other in a nonlinear relationship. This learned mapping capability may constitute a learning ability of the neural network. A neural network trained for a specialized purpose, such as image restoration, may exhibit a generalization ability to generate a relatively accurate output with respect to an untrained input pattern.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a processor-implemented method includes segmenting a first original input image comprising a first background region and a first feature region into first patches; determining sampled patches from the first patches by sampling background patches corresponding to the first background region preferentially over feature patches corresponding to the first feature region; generating a first restored image by executing an image restoration model based on the sampled patches; and training the image restoration model to reduce a difference between the first original input image and the first restored image.

The method may further include segmenting a second original input image comprising a second background region and a second feature region into second patches; determining sampled patch sets by sampling the second patches with different sampling patterns; generating second restored images by executing the image restoration model based on the sampled patch sets; and generating a segmentation map indicating the second background region and the second feature region based on a difference between the second original input image and the second restored images.

In the segmentation map, a region in which the difference between the second original input image and the second restored images falls below a threshold may be classified as the second background region, and a region in which the difference between the second original input image and the second restored images exceeds the threshold is classified as the second feature region.

The generating of the segmentation map may include generating a second averaged image by averaging the second restored images; and generating the segmentation map based on a difference between the second original input image and the second averaged image.

The determining of the sampled patches may include determining the sampled patches using a sampling model that is trained to preferentially sample the background patches over the feature patches.

The sampling model may be trained based on determining the sampled patches by executing the sampling model based on the first original input image; determining a class output of the first original input image by executing a classifying model based on the sampled patches; and training the sampling and classifying models based on the class output.

The determining of the sampled patches by executing the sampling model may include generating an input feature representing the first original input image; generating a sampling map comprising sampling points corresponding to the sampled patches by executing the sampling model based on the input feature; and determining the sampled patches from the first patches using the sampling map.

The training of the sampling and classifying models may include training the sampling model to increase a difference between the class output and a class label; and training the classifying model to reduce the difference between the class output and the class label.

The first original input image may be a semiconductor image, and the first feature region may be a defect region.

The first original input image may be a medical image, and the first feature region may be a lesion region.

In one general aspect, provided is a non-transitory computer-readable storage medium storing instructions that, when executed by one or more processors, configure the one or more processors to perform the method described herein.

In one general aspect, an electronic device includes one or more processors configured to segment a first original input image comprising a first background region and a first feature region into first patches, determine sampled patches from the first patches by sampling background patches corresponding to the first background region preferentially over feature patches corresponding to the first feature region, generate a first restored image by executing an image restoration model based on the sampled patches, and train the image restoration model to reduce a difference between the first original input image and the first restored image.

The one or more processors may be further configured to segment a second original input image comprising a second background region and a second feature region into second patches, determine sampled patch sets by sampling the second patches with different sampling patterns, generate second restored images by executing the image restoration model based on the sampled patch sets, and generate a segmentation map indicating the second background region and the second feature region based on a difference between the second original input image and the second restored images.

The one or more processors may be further configured to generate a second averaged image by averaging the second restored images, and generate the segmentation map based on a difference between the second original input image and the second averaged image.

The one or more processors may be further configured to determine the sampled patches using a sampling model that is trained to preferentially sample the background patches over the feature patches.

The one or more processors may be further configured to generate an input feature corresponding to the first original input image, generate a sampling map comprising sampling points corresponding to the sampled patches by executing the sampling model based on the input feature, and determine the sampled patches from the first patches using the sampling map.

The one or more processors may be further configured to train the sampling model to increase a difference between the class output and a class label, and train the classifying model to reduce the difference between the class output and the class label.

In one general aspect, a processor-implemented method includes segmenting an original input image comprising a background region and a feature region into a plurality of patches; determining sampled patch sets by sampling the patches with different sampling patterns; generating restored images by executing a trained image restoration model based on the sampled patch sets as a masked input; and generating a segmentation map distinguishing the background region and the feature region based on a comparison of the original input image with the restored images.

Other features and aspects will be apparent from the following detailed description, the drawings, and the claims.

### BRIEF DESCRIPTION OF THE DRAWINGS

FIG. 1 is a diagram illustrating an example process of training an image restoration model, according to one or more embodiments.
FIG. 2 is a diagram illustrating an example process of generating a segmentation map using a trained image restoration model, according to one or more embodiments.
FIG. 3 is a diagram illustrating an example process of training an image restoration model, a sampling model, and a classifying model, according to one or more embodiments.
FIG. 4 is a diagram illustrating an example sampling and classification process according to one or more embodiments.
FIG. 5 is a diagram illustrating an example process of generating a segmentation mask via iterative image restoration, according to one or more embodiments.
FIG. 6 is a flowchart illustrating an example image processing method, according to one or more embodiments.
FIG. 7 is a block diagram of an example configuration of an electronic device, according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Throughout the specification, when a component, element, or layer is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

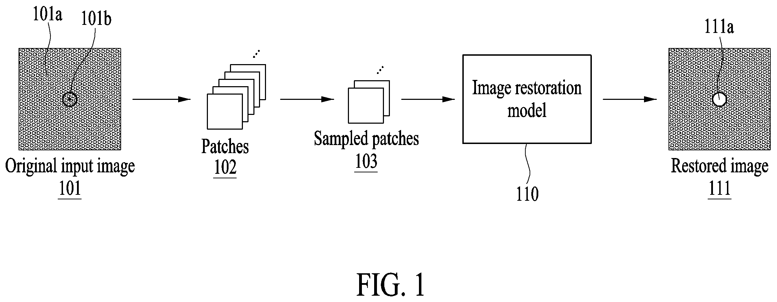

FIG. 1 is a diagram illustrating an example process of training an image restoration model, according to one or more embodiments. Referring to FIG. 1, an original input image 101 may include a background region 101a and a feature region 101b. In the original input image 101, the background region 101a may occupy a larger area than the feature region 101b. The background region 101a may exhibit structural regularity. The feature region 101b may exhibit various shapes and irregularity. The background region 101a may include an iterative pattern and the feature region 101b may disrupt the iterative pattern of the background region 101a, but the example is not limited thereto.

In one or more embodiments, the original input image 101 may be a semiconductor image and the feature region 101b may be a defect region. The semiconductor image may capture an entire semiconductor device or a portion thereof, using a high-magnification imaging device such as an electron microscope as a non-limiting example. The original input image 101 may be a medical image and the feature region 101b may be a lesion region. Non-limiting examples of such medical images may include x-ray images, computed tomography (CT) scans, magnetic resonance imaging (MRI) scans, ultrasound images, positron emission tomography (PET) scans, and endoscopy images.

The original input image 101 may be input to an image restoration model 110. The image restoration model may be implemented using a deep learning-based neural network model. The image restoration model may include an encoder-decoder architecture comprising an encoding model and a decoding model. The encoding model and the decoding model may be transformer models as a non-limiting example. The encoding model may generate an encoded result by encoding a model input (e.g., sampled patches 103), and the decoding model may generate a model output (e.g., a restored image 111) by decoding the encoded result.

The input to the image restoration model 110 may comprise a portion or subset of the original input image 101. The image restoration model 110 may be trained to restore the original input image 101 from the portion of the original input image 101. The image restoration model 110 may generate a restored image 111 based on the portion of the original input image 101. The image restoration model 110 may be trained to reduce a difference between the original input image 101 and the restored image 111. The image restoration model 110 may generate a plurality of restored images based on a plurality of original images and may be trained based on the plurality of restored images. Through such iterative training, the image restoration model 110 may obtain image restoration capabilities.

The portion of the original input image 101 used for training may be generated through various methods. For example, the original input image 101 may be segmented into patches 102, and sampled patches 103 corresponding to a portion of the patches 102 may be selected and used as input to the image restoration model 110. The sampled patches 103 may correspond to a masked input configured to mask certain regions of the original input image 101. The patches 102 may be generated by sampling the original input image 101 based on a grid pattern as a non-limiting example.

The patches 102 may include background patches corresponding to the background region 101a and feature patches corresponding to the feature region 101b. The sampled patches 103 may be determined/selected in a non-uniform sampling manner that favors the background patches over the feature patches. As a result, the background patches may be sampled more frequently and at a higher probability than the feature patches, causing the sampled patches 103 to include an overwhelming number of background patches compared to the feature patches.

Beyond the fact that background patches are sampled more than the feature patches due to a ratio between the background patches to the feature patches, the preferential sampling of the background patches may represent that the background patches are sampled at a ratio greater than a ratio between the background patches and the feature patches. Based on an assumption that a ratio between the background patches and the feature patches is 1:1, a probability of sampling the background patches may be set higher than a probability of sampling the feature patches.

The restored image 111 generated by the image restoration model 110 may include an incomplete restored region 111a. The incomplete restored region 111a may refer to a region having a significant difference from the original input image 101. In the training scheme described in FIG. 1, the image restoration model 110 may demonstrate higher restoration performance for the background region 101a, but lower restoration performance for the feature region 101b. The incomplete restored region 111a may be used to facilitate a segmentation process of the original input image 101 into the background region 101a and the feature region 101b. The segmentation process is further described below.

By preferentially sampling of background patches, the restoration performance of the image restoration model 110 for the feature region 101b may degrade. In this case, the incomplete restored region 111a may appear more clearly. This increased disparity enhances the image restoration model 110's capability to distinguish between the background region and the feature region, thereby improving segmentation performance.

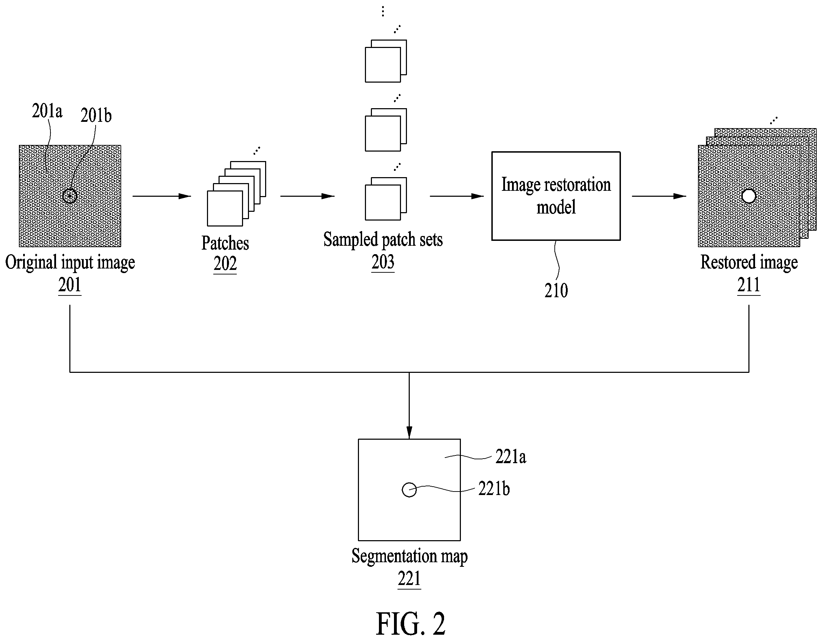

FIG. 2 is a diagram illustrating an example process of generating a segmentation map using a trained image restoration model, according to one or more embodiments. Referring to FIG. 2, an original input image 201 may include a background region 201a and a feature region 201b. The original input image 201 may be the same as or different from the original input image 101 shown in FIG. 1. The original input image 101 used for training an image restoration model 210 may be referred to as a first original input image, and the original input image 201 used for inference by the image restoration model 210 may be referred to as a second original input image.

The original input image 201 may be segmented into patches 202. Sampled patch sets 203 may be determined by sampling the patches 202 using different sampling patterns. The sampled patch sets 203 may include different portions of the patches 202, respectively. The patches 202 may include background patches corresponding to the background region 201a and feature patches corresponding to the feature region 201b. The sampled patch sets 203 may be determined by uniformly sampling the background patches and the feature patches of the patches 202. In each sampling pattern, the patches 202 may be sampled based on the same probability.

Restored images 211 may be generated by executing the image restoration model 210 based on the sampled patch sets 203. The sampled patch sets 203 and the restored images 211 may correspond to each other. For example, a first restored image of the restored images 211 may be generated by executing the image restoration model 210 based on a first sampled patch set of the sampled patch sets 203, and a second restored image of the restored images 211 may be generated by executing the image restoration model 210 based on a second sampled patch set of the sampled patch sets 203.

A segmentation map 221 of the original input image 201 may be generated based on a difference between the original input image 201 and the restored images 211. The segmentation map 221 may identify the background region 201a and the feature region 201b. Specifically, a first region 221a of the segmentation map 221 may correspond to the background region 201a and a second region 221b of the segmentation map 221 may correspond to the feature region 201b.

Regions of the segmentation map 221 are determined using a threshold. For example, in the segmentation map 221, the first region 221a in which a difference between the original input image 201 and the restored images 211 is less than the threshold may correspond to the background region 201a, and the second region 221b in which the difference between the original input image 201 and the restored images 211 is greater than the threshold may correspond to the feature region 201b. The threshold may be set based on a distribution of pixel values of the segmentation map 221. For example, the threshold may be set between pixel values indicating a rapid change among the pixel values.

The segmentation map 221 may be generated based on an averaged image of the restored images 211. The averaged image may be generated by averaging the restored images 211 and the segmentation map 221 may be generated based on a difference between the original input image 201 and the averaged image. The averaged image may be generated by averaging pixel values in corresponding positions of the restored images 211.

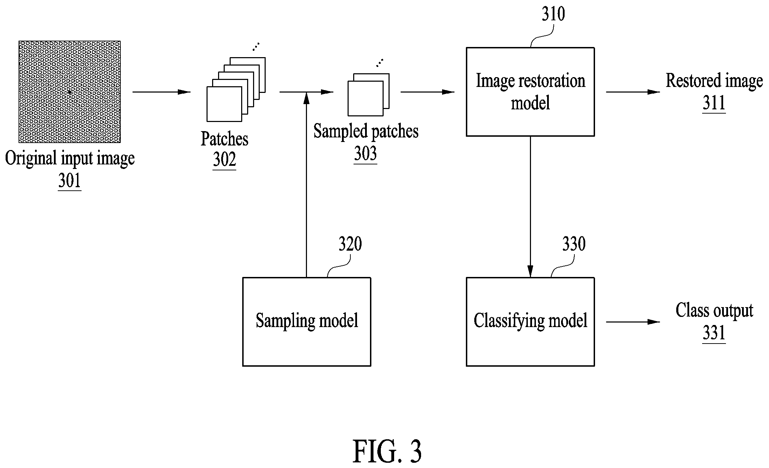

FIG. 3 is a diagram illustrating an example process of training an image restoration model, a sampling model, and a classifying model, according to one or more embodiments. Referring to FIG. 3, sampled patches 303 may be determined by executing a sampling model 320 based on an original input image 301. The sampling model 320 may be implemented as a deep learning-based neural network model. Patches 302 may include background patches and feature patches. According to one or more embodiments, a classifying model 330 may be further used to train the sampling model 320. The classifying model 330 may be implemented as a deep learning-based neural network model. A class output 331 of the original input image 301 may be determined by executing the classifying model 330 based on the sampled patches 303. The sampling model 320 and the classifying model 330 may be trained using the class output 331.

The sampling model 320 may be trained to sample the background patches preferentially over the feature patches from the patches 302. As a result of sampling by the sampling model 320, the sampled patches 303 may be determined. The image restoration model 310 may include an encoder-decoder architecture comprising an encoding model and a decoding model. The encoding model may generate an encoded result by encoding a model input (e.g., the sampled patches 303), and the decoding model may generate a model output (e.g., a restored image 311) by decoding the encoded result. For example, the encoded result may be a feature map. The classifying model 330 may generate the class output 331 based on the encoded result. The class output 331 may be an estimation result for a class of the original input image 301.

The image restoration model 310, the sampling model 320, and the classifying model 330 may be trained using a dual-loss function, where a first loss corresponds to a difference between the original input image 301 and the restored image 311 and a second loss corresponds to a difference between the class output 331 and a class label. The class label may be ground truth (GT) for the class of the original input image 301.

According to one or more embodiments, the image restoration model 310, the sampling model 320, and the classifying model 330 may be trained simultaneously. The image restoration model 310 and the classifying model 330 may be trained to reduce the first loss and the second loss. The sampling model 320 may be trained in an adversarial direction to the classifying model 330. For example, the sampling model 320 may be trained to increase the second loss. The sampling model 320 may be trained to increase the difference between the class output 331 and the class label and the classifying model 330 may be trained to reduce the difference between the class output and the class label.

According to one or more embodiments, the sampling model 320 and the classifying model 330 may be trained first, and the image restoration model 310 may be trained thereafter. In this case, model parameters of the sampling model 320 and the classifying model 330 may be frozen before training the image restoration model 310. The sampling model 320 and the classifying model 330 may be adversarially trained based on the second loss and the image restoration model 310 may be trained to reduce the first loss. Due to the adversarial training, the sampling model 320 may have an capability to preferentially sample the background patches from the patches 302. The sampling model 320 and/or the classifying model 330 may be removed from an inference stage of the image restoration model 310 to generate the segmentation map.

In the training scheme of one or more embodiments, class labels (e.g., a semiconductor defect class, a medical lesion class) may be used to segment a data set in which segmentation between the background region and the feature region is difficult. The image restoration model 310, the sampling model 320, and the classifying model 330 may estimate segmentation maps of images of a data set with high accuracy. The segmentation maps may be used to compensate for or augment the existing class labels.

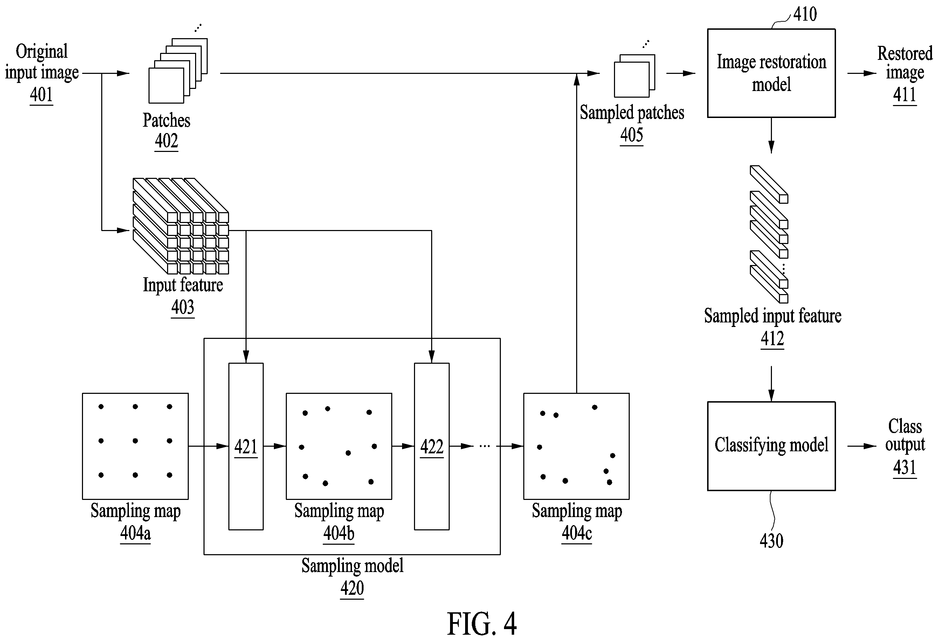

FIG. 4 is a diagram illustrating an example sampling process of a sampling model and an example classification process of a classifying model, according to one or more embodiments. Referring to FIG. 4, patches 402 and an input feature 403 corresponding to an original input image 401 may be generated. The patches 402 may be generated by segmenting the original input image 401. The input feature 403 may be generated based on feature extraction from the original input image 401. A neural network-based feature extraction model may be used to generate the input feature 403. For example, the feature extraction model may be an encoding model.

A sampling model 420 may generate a sampling map 404c including sampling points corresponding to sampled patches 405 based on the input feature 403. The sampling model 420 may include one or more layers 421 and 422. The sampling model 420 may generate a sampling map 404b by updating sampling points of a sampling map 404a based on the input feature 403 and the sampling map 404a, and may generate the sampling map 404c by updating sampling points of the sampling map 404b based on the input feature 403 and the sampling map 404b. The sampled patches 405 may be determined/selected from the patches 402 using the sampling map 404c. Among the patches 402, patches close to the sampling points of the sampling map 404c may be sampled with a high probability. For example, the sampled patches 405 corresponding to positions of the sampling points of the sampling map 404c may be determined/selected from the patches 402.

An image restoration model 410 may use the sampled patches 405 to generate a restored image 411 by performing encoding and decoding. An encoding result by the image restoration model 410 may be a sampled input feature 412. The sampled input feature 412 may be a portion of the input feature 403 corresponding to the sampled patches 405. The classifying model 430 may generate the class output 431 using the sampled input feature 412.

According to one or more embodiments, adversarial training may be applied to the sampling model 420 and the classifying model 430 to reduce classification loss. The sampling model 420 may be trained to increase the difference between the class output 431 and the class label. The classifying model 430 may be trained to reduce the difference between the class output 431 and the class label. For example, the classifying model 430 may be trained based on gradient according to a loss between the class output 431 and the class label, and the sampling model 420 may be trained based on the reverse of the gradient according to the loss between the class output 431 and the class label. In this case, a gradient reversal layer may be provided at an output end of the sampling model 420. Through the adversarial training of the sampling model 420 and the classifying model 430, the sampling model 420 may obtain capabilities to preferentially sample the background patches from the patches 402.

According to one or more embodiments, the sampling model 420 and the classifying model 430 may be co-trained in the same direction to reduce classification loss. For example, the sampling model 420 and the classifying model 430 may be trained to reduce the difference between the class output 431 and the class label. In this case, among the patches 402, patches at distant positions from the sampling points of the sampling map 404c may be sampled. For example, a sampling point may be a center of a two-dimensional (2D) Gaussian mixture model and sampling may be performed on the patches 402 according to a reciprocal of a probability value of the Gaussian mixture model. By performing this training scheme, the sampling model 420 may obtain capabilities to preferentially sample the background patches from the patches 402.

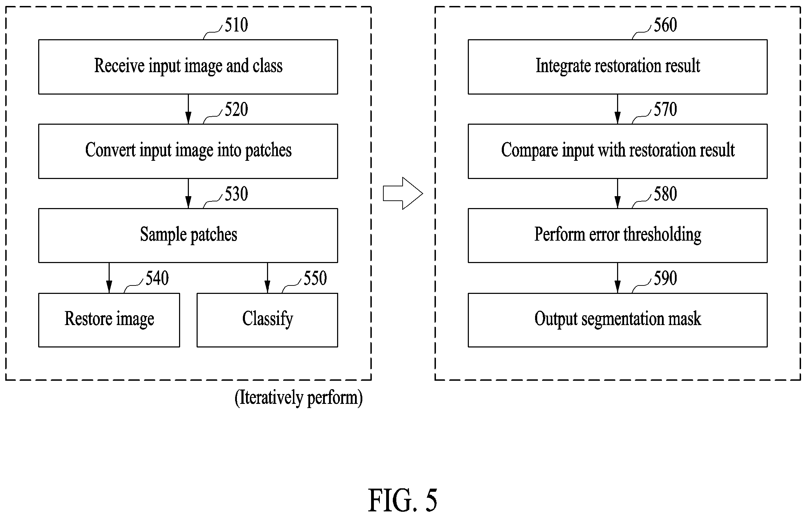

FIG. 5 is a diagram illustrating an example process of generating a segmentation mask via iterative image restoration, according to one or more embodiments. Referring to FIG. 5, in operation 510, an electronic device may receive an input image and a class. The class may be an associated class label of the input image. In operation 520, the electronic device may convert the input image into multiple patches by segmenting the input image. In operation 530, the electronic device may perform patch sampling, preferentially sampling background patches over feature patches.

In operation 540, the electronic device may apply an image restoration model to the sampled patches to perform image restoration. In operation 550, the electronic device may perform classification. The electronic device may apply a classification model to the sampled input features derived from the sampled patches to generate a class output corresponding to the input image. The electronic device may perform operations 540 and 550 in parallel. The electronic device may iteratively perform operations 510 and 550 for a predetermined number of iterations N.

In operation 560, the electronic device may integrate restoration results across all N iterations, for example, by averaging N restored images to generate an averaged image. In operation 570, the electronic device may compare the input with a restoration result. The electronic device may compare the input image with the averaged image, for example, with respect to a pixel-wise difference between the original input image and the averaged image. In operation 580, the electronic device may perform error thresholding. The electronic device may perform an error thresholding operation, based on a threshold, to this difference to identify significant deviations between the input image and the averaged image. In operation 590, the electronic device may output a segmentation mask. The segmentation mask may distinguish a background region and a feature region from the input image.

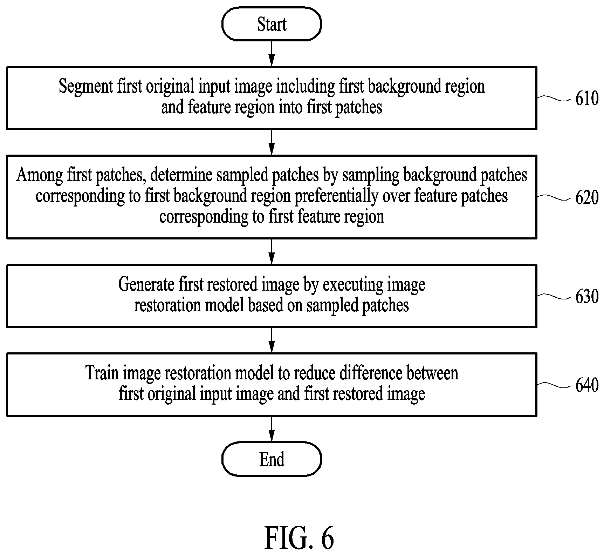

FIG. 6 is a flowchart illustrating an example image processing method, according to one or more embodiments. Image processing may include image segmentation. Referring to FIG. 6, in operation 610, an electronic device may segment a first original input image including a first background region and a first feature region into first patches. In operation 620, among the first patches, the electronic device may determine sampled patches by sampling background patches corresponding to the first background region at a higher rate than feature patches corresponding to the first feature region. In operation 630, the electronic device may generate a first restored image by executing an image restoration model based on the sampled patches. In operation 640, the electronic device may train the image restoration model to reduce a difference between the first original input image and the first restored image.

The electronic device may apply the trained image restoration model to a second original input image including a second background region and a second feature region by segmenting it into second patches. The electronic device may determine sampled patch sets by sampling the second patches with different sampling patterns, and generate second restored images by executing the image restoration model based on the sampled patch sets. The electronic device may generate a segmentation map indicating the second background region and the second feature region based on a difference between the second original input image and the second restored images.

In the segmentation map, a region in which the difference between the second original input image and the second restored images falls below a predetermined threshold may be classified as the second background region and a region in which the difference between the second original input image and the second restored images is equal to or exceeds the threshold may be classified as the second feature region.

The generating of the segmentation map may include generating a second averaged image by averaging the second restored images and generating the segmentation map based on a difference between the second original input image and the second averaged image.

As described above, operation 620 may include an operation of determining the sampled patches using a sampling model trained to sample the background patches preferentially over the feature patches.

The sampling model may be trained based on: (i) an operation of determining the sampled patches by executing a sampling model based on the first original input image, (ii) an operation of determining a class output of the first original input image by executing a classifying model based on the sampled patches, and (iii) an operation of training/updating the sampling and classification models based on the class output and/or ground-truth class labels.

The determining of the sampled patches by executing the sampling model may include generating an input feature corresponding to the first original input image, generating a sampling map including sampling points corresponding to the sampled patches by executing the sampling model based on the input feature, and determining/selecting the sampled patches from the first patches in proximity to those sampling points using the sampling map.

The training of the sampling and classifying models may include training the sampling model to increase a difference between the class output and a class label and training the classifying model to reduce the difference between the class output and the class label.

The first original input image may be a semiconductor image with the first feature region corresponding to a defect region.

The first original input image may be a medical image with the first feature region corresponding to a lesion region.

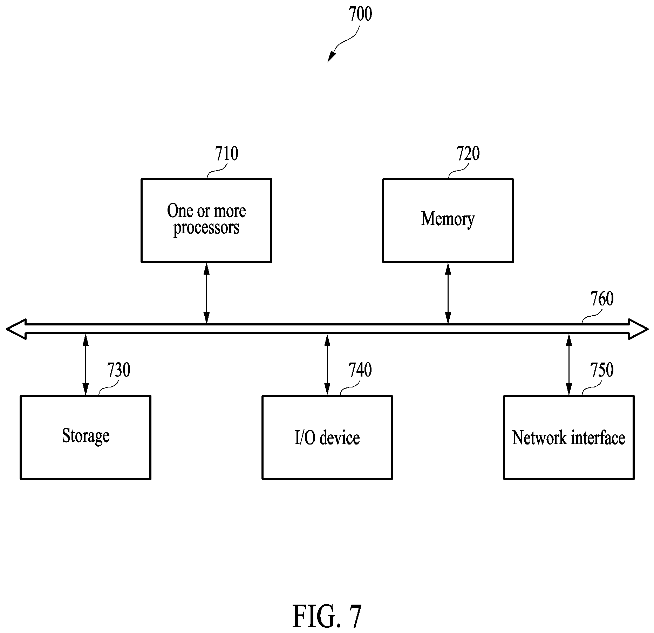

FIG. 7 is a block diagram of an example configuration of an electronic device according to one or more embodiments. Referring to FIG. 7, an electronic device 700 may include one or more processors 710, a memory 720, a storage 730, an input/output (I/O) device 740, and a network interface 750, which may be interconnected via a communication bus 760. For example, the electronic apparatus 1200 may be implemented as, as non-limiting examples, a mobile device (e.g., a mobile phone, a smart phone, a personal digital assistant (PDA), a netbook, a tablet computer, a laptop computer, and the like), a wearable device (e.g., a smart watch, a smart band, smart glasses, and the like), a home appliance (e.g., a television (TV), a smart TV, a refrigerator, and the like), a security device (e.g., a door lock and the like), and a vehicle (e.g., an autonomous vehicle, a smart vehicle, and the like).

The one or more processors 710 may execute instructions stored in the memory 720 or the storage 730. The instructions, when executed by the one or more processors 710, may cause the electronic device 700 (or the one or more processors) to perform the operations described with reference to FIGS. 1 to 6. The memory 720 may include a computer-readable storage medium or a computer-readable storage device. The memory 720 may store instructions to be executed by the one or more processors 710 and may store related information while software and/or an application is executed by the electronic device 700.

The storage 730 may include a computer-readable storage medium or a computer-readable storage device. The storage 730 may store a greater volume of information than the memory 720 and may store the information for a long period of time. For example, the storage 730 may include a magnetic hard disk, an optical disk, flash memory, a floppy disk, and/or other non-volatile memories known in the art.

The I/O device 740 may enable user interaction through for example a keyboard, mouse, touch, voice, and/or image input. The I/O device 740 may detect the input from the user and transmit the detected input to the electronic device 700. The I/O device 740 may provide an output of the electronic device 700 to the user through a visual, auditory, or haptic channel. The I/O device 740 may include, for example, a display, a touchscreen, a speaker, a vibration generator, or any other device configured to provide the output to the user. The network interface 750 may communicate with external devices via wired or wireless networks.

The electronic devices, network interfaces, processors, memories, storages, I/O devices, communication buses, electronic device 700, processors 710, memory 720, I/O device 740, network interface 750, communication bus 760, and other apparatuses, devices, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

EmbodimentsA of the present disclosure provide at least one of the following effects and advantages: A defect part may be accurately detected using self-supervision and semi-supervision using class labels in the anomaly/defect data set without segmentation labels. Furthermore, since class labels may be applied based on sampling, the operation may be robust, even for noisy class labels. The method as described herein may enable the accurate detection and classification of a defect part, for instance a defect part in a semiconductor process, so as to help rapid and/or accurate determination of the cause of defects. A quick response and/or countermeasures against defects may further contribute to increasing the yield in the part manufacturing process. In addition, if a desired defect part is accurately segmented, the classification performance for classifying the type of defect may also increase.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A processor-implemented method, the method comprising:
segmenting a first original input image comprising a first background region and a first feature region into first patches;
determining sampled patches from the first patches by sampling background patches corresponding to the first background region preferentially over feature patches corresponding to the first feature region;
generating a first restored image by executing an image restoration model based on the sampled patches; and
training the image restoration model to reduce a difference between the first original input image and the first restored image.

2. The method of claim 1, further comprising:
segmenting a second original input image comprising a second background region and a second feature region into second patches;
determining sampled patch sets by sampling the second patches with different sampling patterns;
generating second restored images by executing the image restoration model based on the sampled patch sets; and
generating a segmentation map indicating the second background region and the second feature region based on a difference between the second original input image and the second restored images,
wherein preferably, in the segmentation map:
a region in which the difference between the second original input image and the second restored images falls below a threshold is classified as the second background region, and
a region in which the difference between the second original input image and the second restored images exceeds the threshold is classified as the second feature region.

3. The method of claim 2, wherein the generating of the segmentation map comprises:
generating a second averaged image by averaging the second restored images; and
generating the segmentation map based on a difference between the second original input image and the second averaged image.

4. The method of any of the previous claims, wherein the determining of the sampled patches comprises determining the sampled patches using a sampling model that is trained to preferentially sample the background patches over the feature patches.

5. The method of claim 4, wherein the sampling model is trained based on:
determining the sampled patches by executing the sampling model based on the first original input image;
determining a class output of the first original input image by executing a classifying model based on the sampled patches; and
training the sampling and classifying models based on the class output.

6. The method of claim 5, wherein the determining of the sampled patches by executing the sampling model comprises:
generating an input feature representing the first original input image;
generating a sampling map comprising sampling points corresponding to the sampled patches by executing the sampling model based on the input feature; and
determining the sampled patches from the first patches using the sampling map.

7. The method of claim 5 or 6, wherein the training of the sampling and classifying models comprises:
training the sampling model to increase a difference between the class output and a class label; and
training the classifying model to reduce the difference between the class output and the class label.

8. The method of any of the previous claims, wherein the first original input image is a semiconductor image or a medical image,
when the first original input image is the semiconductor image, the first feature region is a defect region, and
when the first original input image is the medical image, the first feature region is a lesion region.

9. A non-transitory computer-readable storage medium storing instructions that, when executed by one or more processors, configure the one or more processors to perform the method of any of the preceding claims.

10. An electronic device comprising:
one or more processors configured to:
segment a first original input image comprising a first background region and a first feature region into first patches,
determine sampled patches from the first patches by sampling background patches corresponding to the first background region preferentially over feature patches corresponding to the first feature region,
generate a first restored image by executing an image restoration model based on the sampled patches, and
train the image restoration model to reduce a difference between the first original input image and the first restored image.

11. The electronic device of claim 10, wherein the one or more processors are further configured to:
segment a second original input image comprising a second background region and a second feature region into second patches,
determine sampled patch sets by sampling the second patches with different sampling patterns,
generate second restored images by executing the image restoration model based on the sampled patch sets, and
generate a segmentation map indicating the second background region and the second feature region based on a difference between the second original input image and the second restored images, wherein preferably, in the segmentation map:
a region in which the difference between the second original input image and the second restored images falls below a threshold corresponds to the second background region, and
a region in which the difference between the second original input image and the second restored images exceeds the threshold corresponds to the second feature region.

12. The electronic device of claim 10 or 11, wherein the one or more processors are further configured to:
generate a second averaged image by averaging the second restored images, and
generate the segmentation map based on a difference between the second original input image and the second averaged image.

13. The electronic device of any of the claims 10-12, wherein the one or more processors are further configured to determine the sampled patches using a sampling model that is trained to preferentially sample the background patches over the feature patches.

14. The electronic device of claim 13, wherein the sampling model is trained based on:
determining the sampled patches by executing the sampling model based on the first original input image;
determining a class output of the first original input image by executing a classifying model based on the sampled patches; and
training the sampling model and the classifying model based on the class output,
wherein preferably the one or more processors are further configured to:
generate an input feature corresponding to the first original input image,
generate a sampling map comprising sampling points corresponding to the sampled patches by executing the sampling model based on the input feature, and
determine the sampled patches from the first patches using the sampling map.

15. The electronic device of any of the claims 10-14, wherein the first original input image is a semiconductor image or a medical image,
when the first original input image is the semiconductor image, the first feature region is a defect region, and
when the first original input image is the medical image, the first feature region is a lesion region.

## Amended claims

### Amended claims in accordance with Rule 137(2) EPC.

1. A processor-implemented method, the method comprising:
segmenting (610) a first original input image (101) comprising a first background region (101a) and a first feature region (101b) into first patches (102);
determining (620) sampled patches (103) from the first patches (102) by sampling background patches corresponding to the first background region (101a) preferentially over feature patches corresponding to the first feature region (101b);
generating (630) a first restored image (111) by executing an image restoration model (110) based on the sampled patches (103); and
training (640) the image restoration model (110) to reduce a difference between the first original input image (101) and the first restored image (111).

2. The method of claim 1, further comprising:
segmenting a second original input image (201) comprising a second background region (201a) and a second feature region (201b) into second patches (202);
determining sampled patch sets (203) by sampling the second patches (202) with different sampling patterns;
generating second restored images (211) by executing the image restoration model (210) based on the sampled patch sets (203); and
generating a segmentation map (221) indicating the second background region (201a) and the second feature region (201b) based on a difference between the second original input image (201) and the second restored images (211),
wherein preferably, in the segmentation map (221):
a region in which the difference between the second original input image (201) and the second restored images (211) falls below a threshold is classified as the second background region (201a), and
a region in which the difference between the second original input image (201) and the second restored images (211) exceeds the threshold is classified as the second feature region (201b).

3. The method of claim 2, wherein the generating of the segmentation map (221) comprises:
generating a second averaged image by averaging the second restored images (211); and
generating the segmentation map (221) based on a difference between the second original input image (201) and the second averaged image.

4. The method of any of the previous claims, wherein the determining of the sampled patches (303; 405) comprises determining the sampled patches using a sampling model (320; 420) that is trained to preferentially sample the background patches over the feature patches.

5. The method of claim 4, wherein the sampling model (320; 420) is trained based on:
determining the sampled patches by executing the sampling model (320; 420) based on the first original input image (301; 401);
determining a class output (331; 431) of the first original input image (301; 401) by executing a classifying model (330; 430) based on the sampled patches; and
training the sampling and classifying models (320, 330; 420, 430) based on the class output (331; 431).

6. The method of claim 5, wherein the determining of the sampled patches by executing the sampling model (420) comprises:
generating an input feature (403) representing the first original input image (401);
generating a sampling map comprising sampling points corresponding to the sampled patches (405) by executing the sampling model (420) based on the input feature (403); and
determining the sampled patches (405) from the first patches using the sampling map.

7. The method of claim 5 or 6, wherein the training of the sampling and classifying models (320, 330) comprises:
training the sampling model (320; 420) to increase a difference between the class output (331; 431) and a class label; and
training the classifying model (330; 430) to reduce the difference between the class output (331; 431) and the class label.

8. The method of any of the previous claims, wherein the first original input image (101) is a semiconductor image or a medical image,
when the first original input image (101) is the semiconductor image, the first feature region (101b) is a defect region, and
when the first original input image (101) is the medical image, the first feature region (101b) is a lesion region.

9. A non-transitory computer-readable storage medium storing instructions that, when executed by one or more processors (710), configure the one or more processors to perform the method of any of the preceding claims.

10. An electronic device (700) comprising:
one or more processors (710) configured to:
segment (610) a first original input image (101) comprising a first background region (101a) and a first feature region (101b) into first patches (102),
determine (620) sampled patches (103) from the first patches (102) by sampling background patches corresponding to the first background region (101a) preferentially over feature patches corresponding to the first feature region (101b),
generate (630) a first restored image (111) by executing an image restoration model (110) based on the sampled patches (103), and
train (640) the image restoration model (110) to reduce a difference between the first original input image (101) and the first restored image (111).

11. The electronic device (700) of claim 10, wherein the one or more processors are further configured to:
segment a second original input image (201) comprising a second background region (201a) and a second feature region (201b) into second patches (202),
determine sampled patch sets (203) by sampling the second patches (202) with different sampling patterns,
generate second restored images (211) by executing the image restoration model (210) based on the sampled patch sets (203), and
generate a segmentation map (221) indicating the second background region and the second feature region based on a difference between the second original input image and the second restored images, wherein preferably, in the segmentation map (221):
a region in which the difference between the second original input image (201) and the second restored images (211) falls below a threshold corresponds to the second background region (201a), and
a region in which the difference between the second original input image (201) and the second restored images (211) exceeds the threshold corresponds to the second feature region (201b).

12. The electronic device (700) of claim 10 or 11, wherein the one or more processors (710) are further configured to:
generate a second averaged image by averaging the second restored images (211), and
generate the segmentation map (221) based on a difference between the second original input image (201) and the second averaged image.

13. The electronic device (700) of any of the claims 10-12, wherein the one or more processors (710) are further configured to determine the sampled patches (303; 405) using a sampling model (320; 420) that is trained to preferentially sample the background patches over the feature patches.

14. The electronic device (700) of claim 13, wherein the sampling model (320; 420) is trained based on:
determining the sampled patches by executing the sampling model (320; 420) based on the first original input image (301; 401);
determining a class output (331; 431) of the first original input image (301; 401) by executing a classifying model (330; 430) based on the sampled patches; and
training the sampling model (320; 420) and the classifying model (330; 430) based on the class output (331; 431),
wherein preferably the one or more processors (710) are further configured to:
generate an input feature (403) corresponding to the first original input image (401),
generate a sampling map comprising sampling points corresponding to the sampled patches (405) by executing the sampling model (420) based on the input feature (403), and
determine the sampled patches (405) from the first patches using the sampling map.

15. The electronic device (700) of any of the claims 10-14, wherein the first original input image (101) is a semiconductor image or a medical image,
when the first original input image (101) is the semiconductor image, the first feature region (101b) is a defect region, and
when the first original input image (101) is the medical image, the first feature region (101b) is a lesion region.
